# EUROPÄISCHE PATENTSCHRIFT

(11) **EP 1 205 720 B1**
(45) Veröffentlichungstag und Bekanntmachung des Hinweises auf die Patenterteilung: **19.10.2005**
(21) Anmeldenummer: 01120170.4
(22) Anmeldetag: 22.08.2001
(51) Int. Cl.: F25D 29/00, H01Q 1/22, H01Q 9/26

(54) **Leseantenne für Kühl- bzw. Gefriergeräte**
Reading aerial for refrigerating or freezing apparatuses
Antenne de lecture pour appareils réfrigérateurs ou congélateurs

(30) Priorität: 14.11.2000 DE 20019288 U
(43) Veröffentlichungstag der Anmeldung: 15.05.2002
(73) Patentinhaber: Liebherr-Hausgeräte Ochsenhausen GmbH, 88416 Ochsenhausen (DE)
(72) Erfinder: Golder, Roger Francis, Aldreth Ely Cambs CB6 3PQ (GB)
(74) Vertreter: Lettau, Christoph

(56) Entgegenhaltungen:
- WO-A-95/14938
- DE-U- 29 912 346
- US-A- 5 258 766
- US-A- 6 094 173
- PATENT ABSTRACTS OF JAPAN vol. 2000, no. 14, 5. März 2001 (2001-03-05) -& JP 2000 310476 A (HITACHI LTD), 7. November 2000 (2000-11-07)

## Beschreibung

Die Erfindung betrifft ein Kühl- und/oder Gefriergerät mit Fächern und/oder Schubladenfächern zum Einlegen von Kühl- und/oder Gefriergütern, einer Tür bzw. einem Deckel zur Entnahme bzw. Befüllung auf einer Seite des Gerätes und mindestens einer Antenne zur Erfassung von Daten, die auf zumindest einem Datenträger gespeichert sind, der einem eingelegtem Gut zugeordnet ist.

Sowohl im Handel und in Verkaufsstätten als auch im Haushalt werden Güter, die gekühlt oder gefroren werden müssen, nämlich vorzugsweise Lebensmittel, eingelagert. Die Haltbarkeit ist dabei in der Regel durch Verfallsdaten bzw. Herstellungs- oder Verkaufsdaten gekennzeichnet. Dazu werden in der Regel Kühlgeräte, Kühlschränke, Gefrierschränke, Kühl-/Gefrierkombinationen oder auch Gefriertruhen eingesetzt. Ebenso kommen auch spezielle Getränkekühlvorrichtungen zum Einsatz, z. B. Weinkühlschränke oder -anlagen.

Dabei bereitet es häufig Schwierigkeiten, einen Überblick über die Verfallsdaten bzw. die Kaufdaten und/oder die noch vorrätigen Mengen in dem Gerät zu behalten.

Ein besonderes Problem ist es, die Waren nach ihren Daten zu ordnen und rechtzeitig zu erkennen, wann sie sich dem Verfallsdatum nähern. Dazu müssen z. B. im gewerblichen Bereich aufwendige Inventarlisten angefertigt werden.

Andererseits befinden sich die Güter in den Geräten oftmals in Schubladen mit undurchsichtigen Wänden, so daß die Kontrolle der Daten und Mengen es erfordert, sämtliche Schubläden zu öffnen, was mit einem erheblichen Kälteverlust verbunden ist.

In DE-U-299 03 032.6 wird vorgeschlagen, die einzelnen einzulegenden Güter mit einem fernabfragbaren Datenträger, einem sogenannten Transponder, zu versehen. Dieser Datenträger enthält Daten, die dem eingelegten Gut zugeordnet sind, und wird mittels einer Antenne und/oder einem Lesegerät ausgelesen, daß die Daten des Datenträgers und dessen Lagerplatz erfaßt. Sobald der Benutzer neue Lebensmittel in das Gerät einlagert, kann er diese mit entsprechend dafür vorgesehenen Transponderelementen kennzeichnen. Vor dem Einlegen des jeweiligen Lebensmittels in das Gerät wird dieses z. B. über einen darauf befindlichen Barcode mit einem entsprechenden Barcodeleser erfaßt. Gleichzeitig wird ein auf dem Transponderelement abgespeicherter Code mit einer Lesevorrichtung gelesen. Die Zuordnung aufgrund des Barcodes des Lebensmittels und dem Code des Transponderelementes erfolgt z. B. in einer entsprechenden Steuereinheit. Auf diese Weise sind die Daten des entsprechenden Lebensmittels, also z. B. das Verfallsdatum, das in dem Barcode gespeichert ist, mit dem Code des Transponderelementes verbunden. Dabei ist der Transponder selbst mit einer Nummer gekennzeichnet. Dieser Nummer wird in der Steuereinheit die entsprechende Ware zugewiesen. Auf dem Barcode des Transponders selbst sind keine Daten über die Ware gespeichert. Wird das Lebensmittel mit diesem Transponderelement in das Gerät eingelegt oder herausgenommen, so registriert die Antenne diesen Vorgang und gibt ein entsprechendes Signal an die Steuereinheit zur Registrierung der entsprechenden Daten. Die Daten und der Lagerplatz können dann optisch und/oder akusstisch angezeigt und/oder ausgedruckt werden. Dabei kann jedem Fach bzw. jeder Schublade eine einzelne Antenne zugeordnet sein.

Ein solches Transponderelement umfasst gemäß DE-U-299 03 032.6 einen elektrischen Schwingkreis. Wird auf diesen Schwingkreis mit dessen Resonanzfrequenz ein elektromagnetisches Feld als Sendeimpuls gestrahlt, so läßt sich mit der Antenne die Reaktion aufgrund des Schwingkreises nachweisen. Ein derartiges System gemäß dem Oberbegriff des Schutzanspruchs 1 ist aus DE-U-299 03 032.6 oder DE 29 912 346 U1 bekannt.

Bei stark gefüllten Geräten besteht jedoch die Gefahr, daß die Antennen nicht nur Transponderelemente der Lebensmittel, die sich in dem jeweiligen Fach befinden, sondern auch der Güter, die sich in benachbarten Fächern befinden, registrieren.

Aufgabe der vorliegenden Erfindung ist es, ein Kühl- und/oder Gefriergerät anzugeben, bei dem eine möglichst genaue Zuordnung der eingelegten Güter zu dem jeweiligen Fächern und eine möglichst präzise Datenauslesung möglich sind.

Diese Aufgabe wird mit einem gattungsgemäßen Kühl- und/oder Gefriergerät gelöst, das die Merkmale des kennzeichnenden Teiles des Anspruchs 1 hat.

Erfindungsgemäß ist vorgesehen, daß mindestens eine Antenne bei dem Kühl- und/oder Gefriergerät vorgesehen ist, die die Form einer gebogenen Schleife mit einem Mittelbereich und zwei U-förmigen Abschlußbereichen umfaßt. Wenigstens einer dieser Abschlußbereiche erstreckt sich in oder an einer Wand des Gerätes, die der Seite des Gerätes mit der Tür bzw. dem Deckel benachbart ist. Zumindest der Mittelbereich hingegen erstreckt sich an oder in der Wand des Gerätes, die der Tür bzw. dem Deckel gegenüberliegt. Auf diese Weise lassen sich mit einer Antenne zwei Raumrichtungen auf die Präsenz eines Transponderelementes abfragen. Dadurch läßt sich die genaue Lage eines Lebensmittels in dem Gerät besser feststellen. Die Antenne läßt sich mit einem Lesevorgang auslesen, so daß mit nur einem Lesevorgang Informationen über die gesamte Fläche zu erhalten sind. Bei dem Kühl- und/oder Gefriergerät kann es sich z. B. um einen Kühlschrank, einen Gefrierschrank, eine Kühl-/Gefrierkombination oder auch um eine Gefriertruhe handeln. Ebenso sind spezielle Getränkekühlgeräte denkbar, wie z. B. ein Weinkühlschrank. Bei schrankartigen Geräten befindet sich dabei der Mittelbereich der schleifenförmigen Antenne in oder an der Rückwand, bei truhenartigen Geräten im Boden.

Um eine noch höhere Auslesegenauigkeit zu erreichen, erstreckt sich bei einer Weiterbildung nicht nur der eine U-förmige Abschlußbereich der Schleife entlang einer Seitenwand, sondern auch der andere. Insofern liegen die U-förmigen Abschlußbereiche in bzw. an gegenüberliegenden Wänden des Gerätes, während sich der Mittelbereich in bzw. an dem Boden bzw. der Rückwand befindet. Ohne den Leseaufwand beim Auslesen der Daten zu erhöhen, wird auf diese Weise eine noch genauere Abdeckung des Meßbereichs erreicht. Die schleifenförmige Antenne umschließt hufeisenförmig den Datenträger, der mit dem eingelegten Gut zusammen in dem Gerät eingelagert ist. So ist eine genaue Feststellung der Lage sichergestellt.

Bei einer erfindungsgemäßen Ausführungsform ist die Antenne fachübergreifend ausgestaltet. Ein Teil der schleifenförmigen Antenne befindet sich an bzw. in den Wänden eines ersten Faches, während sich der zweite Teil der Antenne an bzw. in den Wänden eines zweiten Faches befindet. Bei dieser vorteilhaften Ausführungsform sind die einzelnen Schenkel der U-förmigen Abschlußbereiche dabei unterschiedlichen Fächern zugeordnet. Eine solche Ausführungsform ermöglicht im speziellen die genaue Feststellung von Transponderelementen mit den zugeordneten Lebensmitteln, die sich auf einem Fachboden liegend befinden.

Bei einer anderen erfindungsgemäßen Ausführungsform ist alternativ oder zusätzlich vorgesehen, daß einzelnen Fächern jeweils eine Fachantenne zugeordnet ist. Diese Fachantenne befindet sich vollständig im Bereich eines Faches und ist in oder an den Wänden dieses Faches in Schleifenform vorgesehen. Derartige Antennen gewährleisten eine sichere Feststellung von Gütern in dem einzelnen Fach.

Aufgrund der schleifenförmigen Anordnung in den Wänden eines Faches ist eine genaue Auslesung der Datenträger in dem entsprechenden Fach aufgrund der besonderen gebogenen Schleifenform der Antenne möglich.

Antennen mit der Form dieser Ausführngsform können auch anders im Gerät angeordnet sein, z.B. unter Einbeziehung der Fachböden.

Selbstverständlich ist eine noch höhere Genauigkeit und noch bessere Zuordnungsmöglichkeit gegeben, wenn sowohl fachübergreifende als auch Fachantennen gemäß den obigen Ausführungsformen vorgesehen sind.

Bei einer vorteilhaften Weiterbildung sind je Fach bzw. Schubladenfach zumindest zwei zusätzliche Gateantennen vorgesehen, die an oder in vorzugsweise gegenüberliegenden Wänden eines Faches angeordnet sind. Die Gateantennen sind in Form einer flächigen Schleife ausgebildet, die an bzw. in der Wand oder einem Fachboden lliegt. Solche Gateantennen lassen sich einzeln auslesen und ermöglichen eine unabhängige zusätzliche Auslesung der Daten von Datenträgern, die sich mit den zugeordneten Gütern in dem jeweiligen Fach befinden.

Besonders vorteilhaft ist es dabei, wenn die zwei Gateantennen, die einem Fach zugeordnet sind, derart miteinander in Reihe verschaltet sind, daß sich ihre Signale verstärken, wenn sich ein Datenträgerelement zwischen ihnen befindet.

Gerade z. B. bei schleifenförmigen Antennen, die hufeisenförmig gebogen sind, ergibt sich das Problem, daß Datenträger, die symmetrisch bezüglich der Antenne angeordnet sind, nur schwache Signale liefern, da in den einzelnen Abschlußbereichen des Hufeisens entgegenläufige Signale induziert werden. Durch zusätzliche Gateantennen, die entsprechend geschaltet sind, läßt sich erreichen, daß sich auch solche Datenträger erfaßt werden können.

Bei einer anderen vorteilhaften Weiterbildung ist zumindest eine Ergänzungsantenne vorgesehen, die sich schleifenförmig entlang einer Wand des Gerätes erstreckt, an der sich sonst keine Antenne befindet. So läßt sich auch in den äußeren Fächern, z. B. dem Bodenfach eines Schrankgerätes, sicher die Präsenz eines Datenträgers feststellen.

Die Antennen müssen geeignet sein, ein elektromagnetisches Feld auszusenden, z. B. als Sendepuls. Die Schleifenform der erfindungsgemäßen Antenne umfaßt dazu eine spulenartige Anordnung. Die Antennen bzw. Gateantennen bzw. Ergänzungsantennen können z. B. mehrfache Kupferwicklungen umfassen oder aber auch als einadriges Kupferrohr ausgebildet sein, je nach Anforderungen an Platz und Auslesegenauigkeit.

Die Antennen können sich an den Innenwänden der jeweiligen Fächer befinden. Besonders ansprechend ist es jedoch, wenn die Antennen sich innerhalb der Gerätewände befinden, z. B. in diese eingeschäumt sind, so daß sie für den Benutzer nicht sichtbar sind und keine Behinderung bei der Befüllung bzw. Entnahme darstellen.

Die Signale der Antennen können mit Hilfe einer elektronischen Rechnereinheit ausgewertet werden. Eine solche Rechnereinheit kann z. B. ein Verwaltungsprogramm bearbeiten, das aus den Signalen der Antenne jeweils die genaue Zuordnung zu den Fächern bestimmt, ohne daß das Gerät geöffnet werden muß. Die Rechnereinheit kann zudem entsprechende Inventarlisten führen und auf den drohenden Verfall eines Lebensmittels z. B. durch eine optische Anzeige oder ein akustisches Signal hinweisen. Schließlich ermöglicht eine solche Rechnereinheit eine optimale Lagerhaltung und ermöglicht einen Überblick über den Inhalt des Gerätes.

Die Erfindung wird anhand der anliegenden Figuren detailliert erläutert. Dabei zeigt
- Fig. 1: einen erfindungsgemäßen Gefrierschrank schematisch in seitlicher Teilschnittansicht,
- Fig. 2: schematisch den Innenbereich eines erfindungsgemäßen Gefrierschranks der Fig. 1 in Teilansicht in Blickrichtung A der Fig. 1,
- Fig. 3: schematisch eine seitliche Teilschnittansicht eines erfindungsgemäßen Gefrierschranks,
- Fig. 4: eine schematische Teilansicht des Innenbereichs eines erfindungsgemäßen Gefrierschranks gemäß der Fig. 3 in Blickrichtung B,
- Fig. 5: schematisch eine Leseantenne eines erfindungsgemäßen Gerätes,
- Fig. 6a: schematisch eine Gateantenne einer erfindungsgemäßen Ausführungsform,
- Fig. 6b: schematisch eine weitere Gateantenne einer erfindungsgemäßen Ausführungsform, und
- Fig. 7: schematisch eine Ergänzungsantenne einer erfindungsgemäßen Ausführungsform.

Die Erfindung wird anhand des Beispiels eines Gefrierschranks erläutert. Analog ist die Erfindung jedoch auch z. B. bei Kühlschränken, Weinkühlschränken und/oder Kühl-/Gefrierkombinationen einsetzbar. Im Falle des Einsatzes z. B. mit einer Kühltruhe müssen im folgenden die Begriffe "Rückwand" bzw. "Tür" durch "Boden" bzw. "Deckel" ersetzt werden.

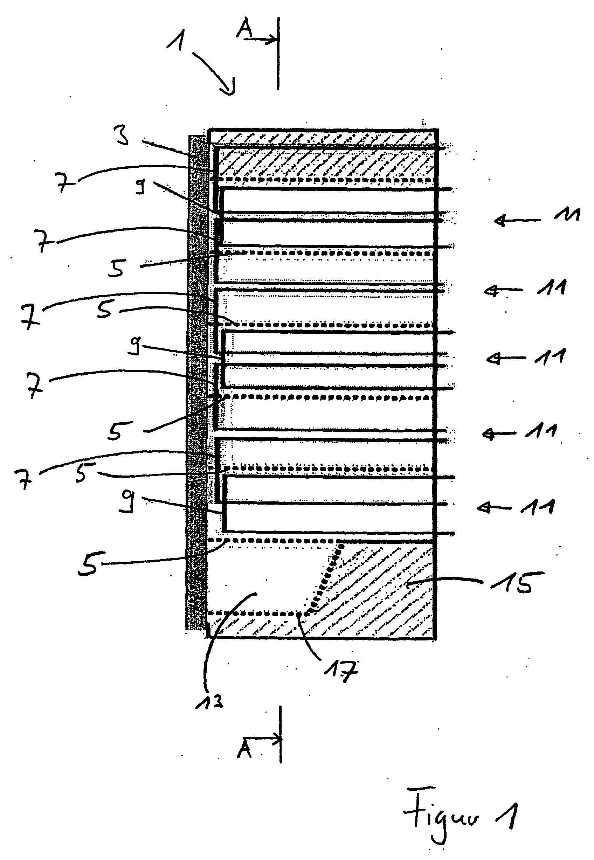

Fig. 1 zeigt eine schematische seitliche Schnittansicht eines Gefrierschranks 1. Der Gefrierschrank ist von einer Tür 3 abgeschlossen und weist mehrere Fächer 11, 13 auf. Die einzelnen Fächer sind durch Fachböden 5 voneinander getrennt. Das untere Fach 13 hat eine geringere Tiefe aufgrund des Motorenbereichs 15 des Gefrierschranks 1. Der Boden des Innenbereichs des Gefrierschranks 1 ist mit 17 bezeichnet.

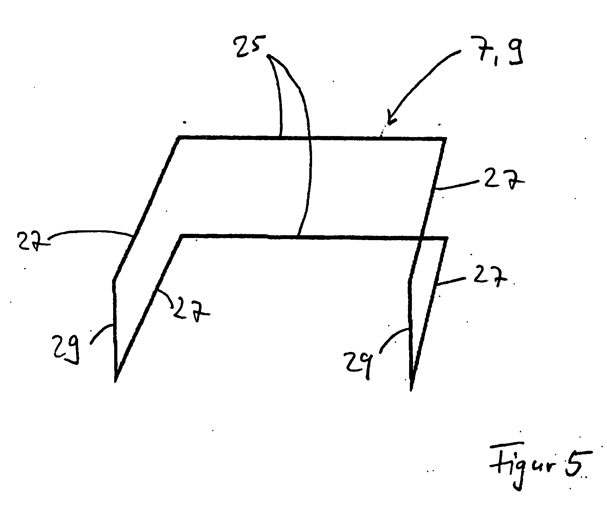

7 und 9 bezeichnen Hufeisenantennen, deren Ausgestaltung mit Hilfe der Figur 5 erläutert wird.

In Fig. 5 ist erkennbar, daß die hufeisenförmigen Antennen 7, 9 in ihrer äußeren Form schleifenförmig ausgestaltet sind. Die Schleife kann aus einem einadrigen Kupferrohr oder einer mehradrigen Kupferwicklung bestehen. Die hufeisenförmige Antenne 7, 9 weist einen Mittelbereich 25 auf, von dem sich U-förmige Abschlußbereiche 27, 29 abwinkeln. Die Schenkel dieser U-förmigen Abschlußbereiche sind mit 27 bezeichnet. Fig. 5 zeigt dabei die äußere Form einer Spulenwicklung. Nicht gezeigt sind die Anschlußdrähte, durch die in bekanner Weise ein Strom in die Antenne geschickt werden kann. Abweichend von der gezeigten Ausführungsform kann die Wicklung der Antenne auch ein einadriges Kupferrohr umfassen.

In Fig. 1 sind fachübergreifende Antennen mit 7 bezeichnet. Sie sind derart angeordnet, daß sich jeweils einer der Schenkel 27 der U-förmigen Abschlußbereiche in einem Fach befindet und der andere Schenkel in einem benachbarten Fach 11. Die senkrechten Bereiche 29 erstrecken sich von einem Fach zu dem benachbarten Fach.

Der Mittelbereich 25 befindet sich an der Rückwand des Schranks 1. Die Wicklungen bzw. das Kupferrohr des Mittelbereichs 25 erstrecken sich also senkrecht zur Ebene der Fig. 1.

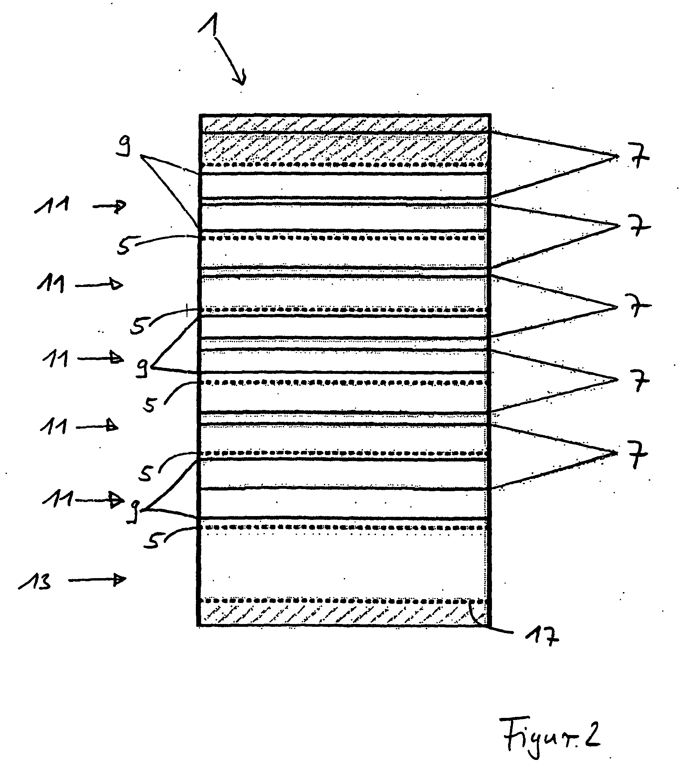

Zusätzlich sind in einzelnen Fächern Fachantennen 9 vorgesehen. Der Aufbau und die Form der Fachantennen 9 entsprechen ebenfalls der Fig. 5, nur daß sich die gesamte schleifenförmige Antenne innerhalb bzw. an einem Fach befindet, ohne fachübergreifend zu sein. Fig. 2 zeigt etwa einen Blick gemäß der Richtung A der Fig. 1 in den Gefrierschrank. Sichtbar sind die jeweiligen Mittelbereiche 25 der hufeisenförmigen Antennen 7, 9. Bei einer Ausführungsform mit eingeschäumten Antennen sind diese Bereiche natürlich innerhalb der Geräterückwand versteckt.

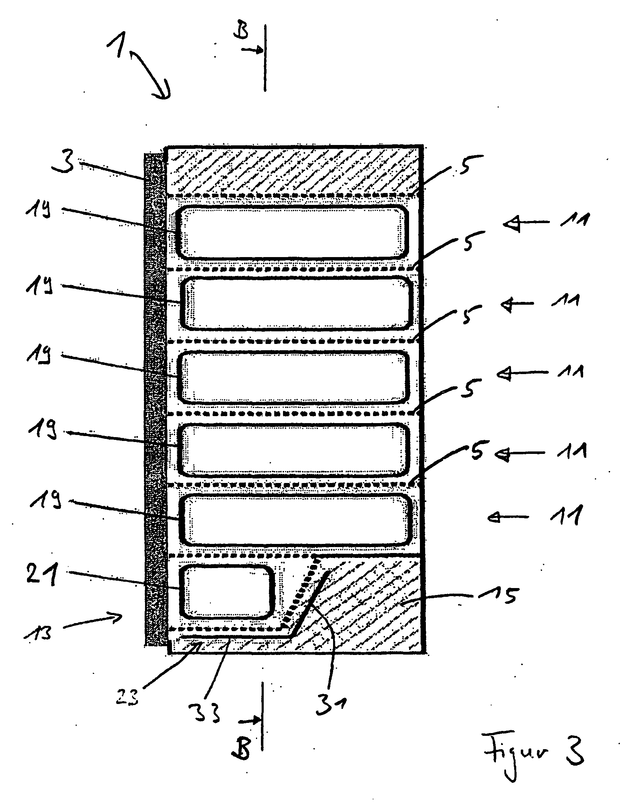

Fig. 3 zeigt eine Ausführungsform mit Gateantennen 19, 21. Solche Gateantennen können zusätzlich zu den mit Bezug zu den Fig. 1 und 2 erläuterten hufeisenförmigen Antennen vorgesehen sein. Die Gateantennen 19, 21 befinden sich in oder an den Seitenwänden des Gefrierschranks 1, der in Fig. 1 in Seitenschnittansicht gezeigt ist. Die Gateantennen 19, 21 sind dabei in Form einer ebenen Schleife. Jedem Fach sind zwei gegenüberliegende Gateantennen zugeordnet. Die Gateantennen eines einzelnen Faches sind dabei derart miteinander in Reihe geschaltet, daß ein Transponderelement, das sich zwischen den Gateantennen befindet, zu einem verstärkten Summensignal führt.

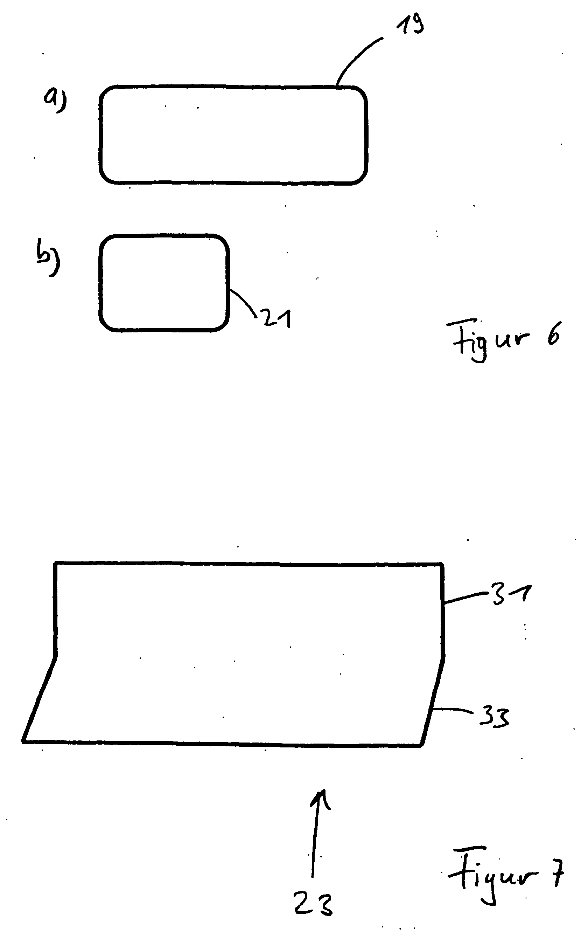

Die Form der Gateantennen 19 bzw. 21 zeigt Fig. 6. Aufgrund der verringerten Tiefe des untersten Faches 13 ist auch die entsprechende Gateantenne 21 kleiner ausgebildet.

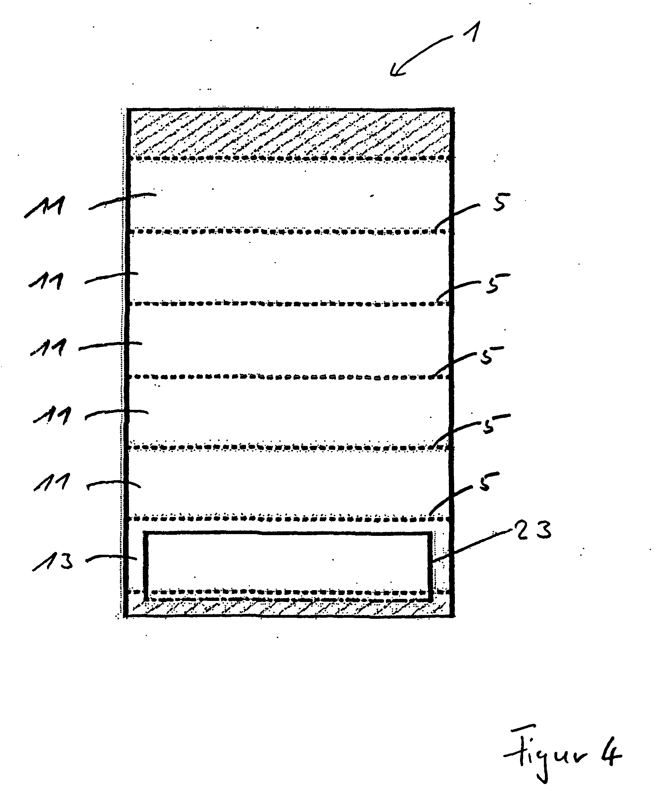

In der schematischen Ansicht des Innenbereichs des Gefrierschranks etwa in Richtung B der Fig. 3 sind die seitlichen Gateantennen 19, 21 nicht sichtbar, siehe Fig. 4. Die Gateantennen sind bei der gezeigten Ausführungsform in die Seitenwände eingeschäumt und haben keine Komponenten entlang der Rückwand.

In Fig. 3 und Fig. 4 ist die Ergänzungsantenne 33 im Bodenbereich des Gefrierschranks 1 erkennbar. Die Bodenantenne bzw. Ergänzungsantenne 23 ist ebenfalls schleifenförmig ausgestaltet und besteht aus zwei abgewinkelten Bereichen 31 und 33. Sie ergänzt sich mit den Gateantennen und gestattet die zusätzliche Ausmessung eines Faches in waagrechter Richtung.

Auch die Gateantennen 19, 21 und die Bodenantenne 23 können aus einadrigem Kupferrohr oder mehradriger Kupferwicklung bestehen.

In den schematischen Figuren 1 bis 7 sind die Antennen als geschlossene Schleifen dargestellt und beschreiben nur schematisch deren äußere Form. Selbstverständlich sind alle Antennen in für Spulenantennen bekannter Weise mit Zuführungsleitungen versehen, die in den Figuren der Übersichtlichkeit halber nicht dargestellt sind. Diese Zuführungsleitungen gestatten das Einspeisen eines Stroms zur Aussendung eines Signals und andererseits das Abgreifen eines erhaltenen Signals zur Weiterleitung an eine Steuereinheit.

Obwohl in Fig. 1 bzw. 2 nur Hufeisenantennen dargestellt sind und in Fig. 3 und 4 nur Gate- bzw. Bodenantennen, können in einem Gefrierschrank sowohl Hufeisenantennen als auch Gate- und Bodenantennen vorgesehen sein.

Ein erfindungsgemäßer Gefrierschrank funktioniert wie folgt.

Ein Lebensmittel wird mit einem entsprechenden Transponderelement versehen. Ein solches Transponderelement umfaßt in bekannter Weise u. a. einen elektrischen Schwingkreis und ist codiert. Vor dem Einlegen des Gutes in den Gefrierschrank wird dem Code des Transponderelements z. B. in der elektronischen Steuereinheit durch manuelle Eingabe oder durch Lesen eines entsprechenden Barcodes auf dem Lebensmittel die Daten des einzulegenden Gutes, z. B. das Verfallsdatum zugeordnet.

Das mit dem Transponderelement Versehene Gut wird in ein Fach 11 des Gefrierschranks 1 eingelegt.

Anlegen eines Stroms an eine fachübergreifende hufeisenförmige Antenne 7 bzw. eine Fachantenne 9 registriert die Präsenz des Transponderelements in seinem Meßbereich durch die Veränderung des elektromagnetischen Signals aufgrund der Anwesenheit des elektrischen Schwingkreises des Transponderelements. Die elektronische Steuereinheit kann dementsprechend die Inventarliste des Gefrierschranks anpassen.

Befindet sich das Transponderelement in etwa symmetrisch in der hufeisenförmigen Antenne 7, 9, so ist deren Signal schwächer, da die abgewinkelten U-förmigen Abschlußbereiche 27, 29 gegenläufige Signale erzeugen.

Zusätzlich wird jedoch von den Gateantennen 19, 21 bei Aussenden eines entsprechenden Sendeimpulses die Präsenz eines Transponderelements in dem jeweiligen Fach festgestellt. Die Gateantennen sind dabei so in Reihe geschaltet, daß ein Transponderelement zwischen den Gateantennen eines Faches zu einer Verstärkung des Summensignales führt. Auf diese Weise läßt sich durch das vorteilhafte Zusammenwirken von Gateantennen 19, 21 und hufeisenförmigen Antennen 7, 9 eine eindeutige Identifizierung der Lage des Transponderelements bzw. Auslesen von dessen Daten sicherstellen.

Eine weitere Erhöhung der Genauigkeit, im speziellen im unteren Bereich des Gefrierschranks läßt sich durch die zusätzliche Bodenantenne 23 erreichen, die auf ähnliche Weise ausgelesen wird wie die Gateantennen 19, 21 bzw. die hufeisenförmigen Antennen 7, 9.

Aus den gesammelten Daten der Gateantennen, der Hufeisenantennen und der Ergänzungsantenne kann die nicht gezeigte Steuereinheit den Inhalt des gesamten Gefrierschranks 1 überwachen und kontrollieren.

Die Anlage kann dabei ständig bzw. intervallweise überwacht werden oder nur bei einer benutzerseitigen Anfrage, die durch entsprechende Eingabe am Steuergerät ausgelöst wird.

## Patentansprüche

1. Kühl- und/oder Gefriergerät mit
- Fächern (11, 13) und/oder Schubladenfächern zum Einlegen von Kühlgütern und/oder Gefriergütern,
- einer Tür (3), bzw. einem Deckel auf einer Seite des Gerätes zur Entnahme und zum Befüllen und
- mindestens einer Antenne (7, 9) zur Erfassung von Daten, die auf zumindest einem Datenträger gespeichert sind, der einem eingelegtem Gut zugeordnet ist,
**dadurch gekennzeichnet, daß**
die mindestens eine Antenne (7, 9) die äußere Form einer gebogenen Schleife mit einem Mittelbereich (25) und zwei U-förmigen Abschlußbereichen (27, 29) umfaßt, wobei wenigstens einer der Abschlußbereiche sich an oder in einer Wand des Gerätes (1) befindet, die der Seite des Gerätes mit der Tür (3) bzw. dem Deckel benachbart ist, und zumindest der Mittelbereich (25) sich an oder in der Wand des Gerätes (1) befindet, die der Tür (3) bzw. dem Deckel gegenüberliegt.

2. Kühl- und/oder Gefriergerät nach Anspruch 1, **dadurch gekennzeichnet, daß** sich die U-förmigen Abschlußbereiche (27, 29) der zumindest einen Antenne (7, 9) in oder an gegenüberliegenden Wänden des Gerätes (1) befinden.

3. Kühl- und/oder Gefriergerät nach einem der Ansprüche 1 oder 2, **dadurch gekennzeichnet, daß** zwei benachbarten Fächern (11, 13) jeweils eine Antenne (7) zugeordnet ist, die fachübergreifend ist und die derart angeordnet ist, daß sich ein Teil der Schleife in oder an einem Fach bzw. Schubladenfach befindet und ein zweiter Teil in einem benachbarten Fach bzw. Schubladenfach, wobei von den U-förmigen Abschlußbereichen (27, 29) jeweils ein Schenkel einem Fach zugeordnet ist.

4. Kühl- und/oder Gefriergerät nach einem der Ansprüche 1 bis 3, **dadurch gekennzeichnet, daß** einzelnen Fächern (11) jeweils eine Antenne als Fachantenne (9) zugeordnet ist, die derart angeordnet ist, daß sich die Schleifenform der Fachantenne vollständig in oder an den Teilen der Wände des Gerätes (1) befindet, die das Fach abschließen, dem die Fachantenne (9) zugeordnet ist.

5. Kühl- und/oder Gefriergerät nach einem der Ansprüche 1 bis 4, **dadurch gekennzeichnet, daß** zusätzlich einzelnen Fächern (11, 13) jeweils zumindest zwei Gateantennen (19, 21) an oder in vorzugsweise gegenüberliegenden Wänden oder Fachunterteilungen zugeordnet sind, wobei die Gateantennen (19, 21) die Form einer Schleife haben, die an oder in einer Wand liegt.

6. Kühl- und/oder Gefriergerät nach Anspruch 5, **dadurch gekennzeichnet, daß** die Gateantennen (19, 21), die einem Fach (11, 13) zugeordnet sind, derart miteinander in Reihe geschaltet sind, daß sich die Signale, die von einem Datenträger, der sich zwischen den Gateantennen (19, 21) eines Faches (11, 13) befindet, in den Gateantennen (19, 21) hervorgerufen werden, verstärken.

7. Kühl- und/oder Gefriergerät nach einem der Ansprüche 1 bis 6, **gekennzeichnet durch** eine zusätzlich Ergänzungsantenne (23), die sich schleifenförmig entlang einer Wand erstreckt, an der sich ansonsten keine Antenne befindet.

8. Kühl- und/oder Gefriergerät nach einem der Ansprüche 1 bis 7, **dadurch gekennzeichnet, daß** die mindestens eine Antenne (7, 9) bzw. die Gateantenne (19, 21) bzw. die Ergänzungsantenne (23) als mehradrige Kupferwicklung oder als einadriges Kupferrohr ausgebildet ist.

9. Kühl- und/oder Gefriergerät nach einem der Ansprüche 1 bis 8, **dadurch gekennzeichnet, daß** die mindestens eine Antenne (7, 9) bzw. die Gateantennen (19, 21) bzw. die Ergänzungsantenne (23) sich im Gehäuse des Gerätes (1) befinden, vorzugsweise in die Wände eingeschäumt sind.

10. Kühl- und/oder Gefriergerät nach einem der Ansprüche 1 bis 9, **gekennzeichnet durch** eine elektronische Rechnereinheit zur Auswertung der Signale der mindestens einen Antenne (7, 9) bzw. der Gateantennen (19, 21) bzw. der Ergänzungsantenne (23).

## Claims

1. Refrigerator and/or freezer having
- compartments (11, 13) and/or drawer compartments for inserting items which are to be refrigerated and/or items which are to be frozen,
- a door (3) or a lid on one face of the appliance for removal and filling purposes, and
- at least one antenna (7, 9) for recording data which is stored on at least one data medium which is associated with an inserted item,
**characterized in that**
the at least one antenna (7, 9) has the outer shape of a bent loop with a middle region (25) and two U-shaped termination regions (27, 29), with at least one of the termination regions being located on or in a wall of the appliance (1) which is adjacent to that face of the appliance which has the door (3) or the lid, and at least the middle region (25) being located on or in the wall of the appliance (1) which is opposite the door (3) or the lid.

2. Refrigerator and/or freezer according to Claim 1, **characterized in that** the U-shaped termination regions (27, 29) of the at least one antenna (7, 9) are located in or on opposite walls of the appliance (1).

3. Refrigerator and/or freezer according to either of Claims 1 and 2, **characterized in that** two neighbouring compartments (11, 13) have one associated antenna (7) which extends over the compartments and is arranged in such a way that one part of the loop is located in or on one compartment or drawer compartment, and a second part is located in a neighbouring compartment or drawer compartment, with one limb of the U-shaped termination regions (27, 29) in each case being associated with one compartment.

4. Refrigerator and/or freezer according to one of Claims 1 to 3, **characterized in that** individual compartments (11) each have an associated antenna in the form of a compartment antenna (9) which is arranged in such a way that the loop shape of the compartment antenna is located completely in or on the parts of the walls of the appliance (1) which close off the compartment with which the compartment antenna (9) is associated.

5. Refrigerator and/or freezer according to one of Claims 1 to 4, **characterized in that** individual compartments (11, 13) each additionally have at least two associated gate antennas (19, 21) on or in preferably opposite walls or compartment subdivisions, with the gate antennas (19, 21) being in the shape of a loop which is on or in a wall.

6. Refrigerator and/or freezer according to Claim 5, **characterized in that** the gate antennas (19, 21) which are associated with a compartment (11, 13) are connected to one another in series in such a way that the signals which are produced in the gate antennas (19, 21) by a data medium located between the gate antennas (19, 21) of a compartment (11, 13) are amplified.

7. Refrigerator and/or freezer according to one of Claims 1 to 6, **characterized by** an additional supplementary antenna (23) which extends in the shape of a loop along a wall on which otherwise no antenna is located.

8. Refrigerator and/or freezer according to one of Claims 1 to 7, **characterized in that** the at least one antenna (7, 9) and/or the gate antennas (19, 21) and/or the supplementary antenna (23) are/is in the form of a multi-core copper winding or a single-core copper pipe.

9. Refrigerator and/or freezer according to one of Claims 1 to 8, **characterized in that** the at least one antenna (7, 9) and/or the gate antennas (19, 21) and/or the supplementary antenna (23) are/is located in the housing of the appliance (1), preferably incorporated into the walls by foam filling.

10. Refrigerator and/or freezer according to one of Claims 1 to 9, **characterized by** an electronic computer unit for evaluating the signals of the at least one antenna (7, 9) and/or of the gate antennas (19, 21) and/or of the supplementary antenna (23).

## Revendications

1. Appareil réfrigérateur et/ou congélateur ayant:
- des compartiments (11, 13) et/ou des tiroirs pour l'introduction de produits à réfrigérer et/ou de produits à congeler;
- une porte (3) ou un couvercle sur un côté de l'appareil pour le prélèvement et pour le remplissage; et
- au moins une antenne (7, 9) pour la saisie de données qui sont enregistrées sur au moins un support de données qui est adjoint à un produit introduit;
**caractérisé en ce que**:
l'antenne (7, 9), au moins au nombre d'une, présente la forme extérieure d'une boucle pliée avec une zone centrale (25) et deux zones de terminaison en forme de U (27, 29), au moins l'une des zones de terminaison se trouvant sur ou dans une paroi de l'appareil (1) qui est adjacente au côté de l'appareil ayant la porte (3) ou le couvercle, et au moins la zone centrale (25) se trouvant sur ou dans la paroi de l'appareil (1) qui est en opposition à la porte (3) ou au couvercle.

2. Appareil réfrigérateur et/ou congélateur selon la revendication 1, **caractérisé en ce que** les zones de terminaison en forme de U (27, 29) de l'antenne (7, 9), au moins au nombre d'une, se trouvent dans ou sur des parois en opposition de l'appareil (1).

3. Appareil réfrigérateur et/ou congélateur selon l'une quelconque des revendications 1 ou 2, **caractérisé en ce qu'**une antenne (7) est à chaque fois adjointe à deux compartiments adjacents (11, 13), laquelle est commune aux compartiments et agencée de telle sorte qu'une partie de la boucle se trouve dans ou sur un compartiment ou un tiroir et une deuxième partie dans un compartiment ou un tiroir adjacent, un montant des zones de terminaison en forme de U (27, 29) étant à chaque fois adjoint à un compartiment.

4. Appareil réfrigérateur et/ou congélateur selon l'une quelconque des revendications 1 à 3, **caractérisé en ce qu'**une antenne est à chaque fois adjointe en tant qu'antenne de compartiment (9) à des compartiments individuels (11), laquelle est agencée de telle sorte que la forme de boucle de l'antenne de compartiment se trouve entièrement dans ou sur les parties des parois de l'appareil (1) qui ferment le compartiment auquel est adjointe l'antenne de compartiment (9).

5. Appareil réfrigérateur et/ou congélateur selon l'une quelconque des revendications 1 à 4, **caractérisé en ce qu'**au moins deux antennes de grille (19, 21) situées sur ou dans des parois ou des divisions de compartiment de préférence en opposition sont également adjointes à chaque fois à des compartiments individuels (11, 13), les antennes de grille (19, 21) présentant la forme d'une boucle qui repose sur ou dans une paroi.

6. Appareil réfrigérateur et/ou congélateur selon la revendication 5, **caractérisé en ce que** les antennes de grille (19, 21) qui sont adjointes à un compartiment (11, 13) sont montées en série l'une avec l'autre de telle sorte que les signaux qui sont engendrés par un support de données qui se trouve entre les antennes de grille (19, 21) d'un compartiment (11, 13) sont amplifiés.

7. Appareil réfrigérateur et/ou congélateur selon l'une quelconque des revendications 1 à 6, **caractérisé par** une antenne de complément (23) supplémentaire qui s'étend en forme de boucle le long d'une paroi sur laquelle ne se trouve encore aucune antenne.

8. Appareil réfrigérateur et/ou congélateur selon l'une quelconque des revendications 1 à 7, **caractérisé en ce que** l'antenne (7, 9), au moins au nombre d'une, l'antenne de grille (19, 21) ou l'antenne de complément (23) est réalisée en tant qu'enroulement de cuivre à plusieurs brins ou en tant que tube de cuivre à un seul brin.

9. Appareil réfrigérateur et/ou congélateur selon l'une quelconque des revendications 1 à 8, **caractérisé en ce que** l'antenne (7, 9), au moins au nombre d'une, les antennes de grille (19, 21) et/ou l'antenne de complément (23) se trouvent dans le boîtier de l'appareil (1), de préférence intégrées par moussage dans les parois.

10. Appareil réfrigérateur et/ou congélateur selon l'une quelconque des revendications 1 à 9, **caractérisé par** une unité d'ordinateur électronique pour l'analyse des signaux de l'antenne (7, 9), au moins au nombre d'une, des antennes de grille (19, 21) et/ou de l'antenne de complément (23).
